# EUROPEAN PATENT APPLICATION

(11) **EP 3 825 878 A1**
(43) Date of publication of application: **26.05.2021**
(21) Application number: 19838688.0
(22) Date of filing: 16.04.2019
(51) Int. Cl.: G06F 21/10, G06Q 10/06

(54) **METHOD AND DEVICE FOR CREDIT EVALUATION OF COPYRIGHT USER BASED ON BLOCK CHAIN**

(30) Priority: 18.07.2018 CN 201810793074
(71) Applicant: Advanced New Technologies Co., Ltd., George Town, Grand Cayman KY1-9008 (KY)
(72) Inventor: YANG, Xinying, Hangzhou, Zhejiang 311121 (CN)
(74) Representative: Bryn-Jacobsen, Caelia
(86) International application number: PCT/CN2019/082908
(87) International publication number: WO 2020/015406

(57) **Abstract**

A method and device for performing credit evaluation on copyright users on the basis of a blockchain are disclosed. When a copyright usage event initiated by a target service node in a blockchain network is determined as illegal, deduction is performed on a copyright credit score corresponding to the target service node, and a deduction in the copyright credit score (namely, a copyright credit score decrement) from the target service node must be subjected to consensus verification of a plurality of service nodes and pass the consensus verification before being made public on the blockchain. A copyright credit score deduction record corresponding to the target service node may be made public on the blockchain, and a copyright credit score corresponding to the target service node can be accordingly determined. A lower copyright credit score corresponding to the target service node indicates a lower credit level of the target service node.

## Description

### TECHNICAL FIELD

Embodiments of the present specification relate to the field of information technologies, and in particular, to a method and device for performing credit evaluation on copyright users on the basis of a blockchain.

### BACKGROUND

Some copyright usage events are illegal in the field of copyright services. For example, a creator of a work first grants distribution rights of the work exclusively to A and then grants the distribution rights of the work to B. It is obvious that since the distribution rights of the work have been granted to A, it is illegal to grant the distribution rights of the work again to B.

Aiming at illegal copyright usage events, a credit evaluation mechanism may be introduced. If a copyright usage event initiated by a person or an institution is illegal, credit evaluation on the person or institution is directly affected.

In practice, creators need to upload works created by themselves to a server of a copyright credit evaluator (which usually may be a copyright-related industry association, a large enterprise in the copyright-related industry, or the like), and the server monitors and records a copyright usage event corresponding to each work. For any work, if the server detects that a copyright usage event corresponding to the work that is initiated by a person or an institution is illegal, the credit rating of the person or institution is lowered.

However, in the field of copyright services, there is a need for a more open and credible credit evaluation method for copyright users.

### SUMMARY

In order to solve the problem that existing credit evaluation methods for copyright users are less open and credible, embodiments of the present specification provide a blockchain-based method and device for performing credit evaluation on copyright users. The technical solutions are as follows:

According to a first aspect of the embodiments of the present specification, a blockchain-based method for performing credit evaluation on copyright users is provided, wherein a blockchain network comprises a plurality of service nodes, and for each service node, the service node has the right to initiate a copyright usage event, the method comprising:

in response to a copyright usage event initiated by a target service node being determined as illegal, determining a copyright credit score decrement, wherein the target service node is any service node;

constructing a credit deduction transfer on the basis of a node identifier of the target service node and the copyright credit score decrement; and

broadcasting the credit deduction transfer to the blockchain network, so that after consensus verification performed by a plurality of service nodes in the blockchain network on the credit deduction transfer is passed, a corresponding relationship between the node identifier and the copyright credit score decrement is established and stored into the blockchain,

wherein a copyright credit score corresponding to the target service node is positively correlated with the credit rating of a user corresponding to the target service node.

According to a second aspect of the embodiments of the present specification, a blcokchain-based device for performing credit evaluation on copyright users is provided, wherein a blockchain network comprises a plurality of service nodes, and for each service node, the service node has the right to initiate a copyright usage event, the device comprising:

a determination module, configured to determine a copyright credit score decrement in response to a copyright usage event initiated by a target service node being determined as illegal, wherein the target service node is any service node;

a credit deduction transfer construction module, configured to construct a credit deduction transfer on the basis of a node identifier of the target service node and the copyright credit score decrement; and

a credit deduction transfer broadcasting module, configured to broadcast the credit deduction transfer to the blockchain network, so that after consensus verification performed by a plurality of service nodes in the blockchain network on the credit deduction transfer is passed, a corresponding relationship between the node identifier and the copyright credit score decrement is established and stored into the blockchain,

wherein a copyright credit score corresponding to the target service node is positively correlated with the credit rating of a user corresponding to the target service node.

According to the technical solutions provided in the embodiments of the present specification, if a copyright usage event initiated by a target service node is determined as illegal, deduction is performed on a copyright credit score corresponding to the target service node, and a deduction on the copyright credit score (namely, a copyright credit score decrement) for the target service node must be subjected to consensus verification of a plurality of service nodes and sucessfully pass the consensus verification before being made public on the blockchain. A copyright credit score deduction record corresponding to the target service node may be made public on the blockchain, and a copyright credit score corresponding to the target service node can be accordingly determined. A lower copyright credit score corresponding to the target service node indicates a lower credit level of the target service node. In this way, an open and credible credit evaluation system for copyright users can be established based on the characteristics of the blockchain that data records can be traced back and data records cannot be tampered with.

It should be understood that the general description above and the detailed description below are only exemplary and explanatory, and cannot limit the embodiments of the present specification.

Furthermore, any of the embodiments of the present specification does not need to achieve all the effects described above.

### BRIEF DESCRIPTION OF THE DRAWINGS

In order to illustrate the technical solutions in the embodiments of the present specification or the prior art more clearly, the drawings to be used in the description of the embodiments or the prior art will be introduced briefly below. Apparently, the drawings described below are merely some embodiments disclosed in the embodiments of the present specification, and those of ordinary skill in the art can obtain other drawings according to these drawings.
FIG. 1 is a schematic flowchart of a method for performing credit evaluation on copyright users on the basis of a blockchain provided in an embodiment of the present specification;
FIG. 2 is a schematic structural diagram of a device for performing credit evaluation on copyright users on the basis of a blockchain provided in an embodiment of the present specification;
FIG. 3 is a schematic structural diagram of a system for performing credit evaluation on copyright users on the basis of a blockchain provided in an embodiment of the present specification; and
FIG. 4 is a schematic structural diagram of a computing apparatus for configuring the method according to an embodiment of the present specification.

### DETAILED DESCRIPTION

Currently, methods for performing credit evaluation on copyright users are usually performed by a server of a copyright credit evaluator. Such centralized credit evaluation methods are less open and transparent. Moreover, a copyright credit score corresponding to each work publisher that is stored on the server of the copyright credit evaluator is possibly tampered with, causing the credibility of the existing methods for performing credit evaluation on copyright users to be low.

It should be noted that the copyright usage events described herein refer to various circumstances in which copyright holders (usually creators of copyright works) exercise copyright property rights. It is well known that copyright property rights generally refer to the rights to earnings from copyright works of copyright holders, specifically including distribution rights, rental rights, reproduction rights, exhibition rights, performance rights, adaptation rights, and so on. For example, a creator of a work first grants distribution rights of the work exclusively to A, which is a copyright usage event.

An illegal copyright usage event refers to a copyright usage event in which a copyright usage behavior of a copyright holder violates the law or breaks an agreement previously reached by various service nodes in a blockchain network. For example, a creator of a work first grants distribution rights of the work exclusively to A and then grants the distribution rights of the work to B. It is obvious that since the distribution rights of the work have been granted to A, obviously, it is illegal to grant the distribution rights of the work again to B.

In view of this, the present invention provides a solution for performing credit evaluation on copyright users on the basis of a blockchain. An open and credible credit evaluation system for copyright users is constructed based on the characteristics of the blockchain that data records can be traced back and data records cannot be tampered with. Under this system, deduction of a copyright credit score corresponding to each service node in a blockchain network must be subjected to consensus verification of a plurality of service nodes, and once a copyright credit score decrement corresponding to each service node is stored into the blockchain, it cannot be withdrawn or tampered with. Therefore, for each service node, a copyright credit score corresponding to the service node can accurately reflect a level of credibility of a user corresponding to the service node in the field of copyright services. Such a credit evaluation system can effectively regulate the behaviors of service nodes using copyrights and reduce the occurrence of illegal copyright usage events.

In order to enable those skilled in the art to better understand the technical solutions in embodiments of the present specification, the technical solutions in the embodiments of the present specification will be described in detail below with reference to the accompanying drawings in the embodiments of the present specification. It is apparent that the described embodiments are merely some, rather than all, of the embodiments of the present specification. All other embodiments obtained by those of ordinary skill in the art based on the embodiments in the present specification shall fall within the protection scope.

The technical solutions provided in the embodiments of the present specification are described in detail below with reference to the accompanying drawings.

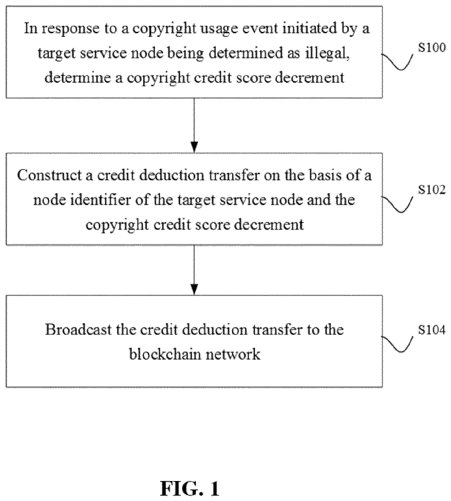

FIG. 1 is a schematic flowchart of a method for performing credit evaluation on copyright users on the basis of a blockchain provided in an embodiment of the present specification, which includes the following steps:

S 100: in response to a copyright usage event initiated by a target service node being determined as illegal, determine a copyright credit score decrement.

In an embodiment of the present specification, a blockchain network includes a plurality of service nodes, and for each service node, the service node has the right to publish a work to the blockchain and the right to initiate a copyright usage event. For example, for a service node A, not only it can serve as a creator of a work to publish the work on the blockchain, but also it can serve as a copyright user to initiate a copyright usage event of granting a work published by itself to other service nodes for performance.

The execution body of the method may be any service node (referred to as an execution service node) in the blockchain network, where the execution service node performs the method shown in FIG. 1 by invoking a smart contract stored in the blockchain for implementing the process of the method shown in FIG. 1. It should be noted that the execution service node may be randomly specified in the service nodes whenever the method shown in FIG. 1 needs to be performed.

In an embodiment of the present specification, the target service node may be a service node corresponding to a user who is a natural person, or may be a service node corresponding to an institution owning a lot of copyright works. It should also be noted that, since the target service node is also any service node in the blockchain network, the target service node and the execution service node may be the same service node.

In addition, a management node may be added to the blockchain network to serve as the execution body of the method shown in FIG. 1. The management node does not participate in the execution of a copyright service, but is just responsible for the management of the copyright service. The management node usually also performs the method shown in FIG. 1 by invoking the smart contract stored in the blockchain for implementing the process of the method shown in FIG. 1.

In the scenario of copyright service, for each copyright work published to the blockchain, in order to prevent the occurrence of illegal copyright usage events (illegal copyright usage events such as contract-breaking copyright assignment, improper granting of a work license, or granting of an exclusive license to multiple parties) based on the copyright work, copyright state information corresponding to the work may be maintained in the blockchain.

For example, assuming service node A publishes a copyright work A to the blockchain, at the moment, copyright state information corresponding to copyright work A is Unauthorized. Service node A grants distribution rights of copyright work A exclusively to a service node B and subsequently triggers update of a smart contract of copyright work A, and service node A publishes updated copyright state information (service node B has been authorized for exclusive distribution) o the blockchain based on the smart contract. Then, service node A grants performance rights of copyright work A to a service node C and again triggers the smart contract, and service node A publishes re-updated copyright state information (service node B has been authorized for exclusive distribution and service node C has been authorized for performance) to the blockchain based on the smart contract.

For each copyright usage event based on copyright work A, whether the copyright usage event is legal needs to be verified according to copyright state information corresponding to copyright work A that is currently announced on the blockchain. The execution body performing the legality verification may be the management node in the blockchain network, or may be a plurality of service nodes (on the basis of a consensus mechanism) in the blockchain network.

In view of the above, in an embodiment of the present specification, for each copyright usage event occurring in the blockchain network, whether the copyright usage event is legal or illegal may be determined in the aforementioned manner.

That is, in an embodiment of the present specification, the execution service node determines a copyright usage event initiated by the target service node, which may be specifically that the execution service node determines a target work involved in the copyright usage event, and determines whether the copyright usage event is legal according to copyright state information corresponding to the target work that is stored in the blockchain.

In addition, the execution service node may also obtain a legality verification result for the copyright usage event (aimed at the legality of the copyright usage event is performed by other service nodes), and determine whether the copyright usage event is legal based on the legality verification result.

When the copyright usage event initiated by the target service node is determined as illegal, it causes a deduction of a copyright credit score corresponding to the target service node.

In an embodiment of the present specification, the copyright credit score decrement refers to the value of a credit score to be deducted, which is usually a positive value. The copyright credit score decrement may be randomly determined, or may be determined according to actual service requirements. Those skilled in the art can easily think of a variety of manners to determine the copyright credit score decrement.

Several techniques of determining the copyright credit score decrement are exemplarily provided below. Those skilled in the art should understand that this does not constitute limitations of the solution.

Technique 1: a first specified score may be determined as the copyright credit score decrement. That is, a fixed score may be used as the copyright credit score decrement.

For Technique 1, further, before the copyright credit score decrement is determined, the number of copyright usage events already initiated by the target service node may be determined, and if the number of the copyright usage events already initiated by the target service node reaches a specified number, a proportion of illegal copyright usage events in the copyright usage events already initiated by the target service node is determined as an illegality proportion, and then a penalty coefficient is determined according to the illegality proportion. The penalty coefficient is not less than 1, and the illegality proportion is positively correlated with the penalty coefficient.

Afterwards, the first specified score may be multiplied by the penalty coefficient, and the first specified score multiplied by the penalty coefficient is used as the copyright credit score decrement.

For example, the number of the copyright usage events already initiated by the target service node is 100 (reaching a specified number 100), where the number of illegal copyright usage events is 80, then the illegality proportion is 80%, and a corresponding penalty coefficient may be determined as 1.5. For another example, the number of works already published by the target service node on the blockchain is 100, where the number of illegal copyright usage events is 60, then the illegality proportion is 60%, and a corresponding penalty coefficient may be determined as 1.3. In this way, assuming that the first specified score is 20 points and the illegality proportion is 60%, and then the copyright credit score decrement is 20*1.3=26 points.

Technique 2: determine, as a target illegality type, an illegality type corresponding to the copyright usage event; and use a penalty score corresponding to the target illegality type as the copyright credit score decrement according to preset corresponding relationships between illegality types and penalty scores.

Common illegality types include, but are not limited to, contract-breaking copyright assignment, improper granting of a work license, granting of an exclusive license to multiple parties, and so on. Penalty scores corresponding to different illegality types may be the same or different.

Technique 3: determine the number of illegal copyright usage events already initiated by the target service node; and determine the copyright credit score decrement according to the number of the illegal copyright usage events already initiated by the target service node, where the number of the illegal copyright usage events already initiated by the target service node is positively correlated with the determined copyright credit score decrement.

The meaning here is that the more illegal copyright usage events initiated by the target service node, the greater the deduction of the corresponding credit score thereof. For example, if the target service node initiates a first illegal copyright usage event, a corresponding copyright credit score decrement is 10 points; if a second illegal copyright usage event is initiated, a corresponding copyright credit score decrement is 15 points; if a third illegal copyright usage event is initiated, a corresponding copyright credit score decrement is 20 points.

S102: construct a credit deduction transfer on the basis of a node identifier of the target service node and the copyright credit score decrement.

The transfer described in the present specification refers to a piece of data that is created by a user through a client of the blockchain and needs to be finally published to a distributed database of the blockchain.

Transfers in the blockchain include transfers in a narrow sense and transfers in a broad sense. A transfer in the narrow sense refers to a value transfer published by a user to the blockchain. For example, in a conventional Bitcoin blockchain network, a transfer may be an account transfer initiated by a user in a blockchain. However, a transfer in the broad sense refers to a piece of service data having a service intention that is published by a user on the blockchain. For example, an operator may build an consortium blockchain according to actual service requirements, and deploy some other types of online services (for example, a house-rental service, a vehicle scheduling service, an insurance claims service, a credit service, and a medical service) independent from value transfer based on the consortium blockchain. In such a consortium blockchain, a transfer may be a service message or service request having a service intention that is published by a user on the consortium blockchain.

In an embodiment of the present specification, the credit deduction transfer actually refers to data including the node identifier of the target service node and the copyright credit score decrement.

S104: broadcast the credit deduction transfer to the blockchain network.

The credit deduction transfer is broadcast to the blockchain network, so that after consensus verification performed by a plurality of service nodes in the blockchain network on the credit deduction transfer is passed, a corresponding relationship between the node identifier and the copyright credit score decrement is established and stored into the blockchain (that is, the corresponding relationship between the node identifier and the copyright credit score decrement is stored into the blockchain). The plurality of service nodes may be all service nodes in the blockchain network, or may be some service nodes in the blockchain network.

In this way, credit score deduction for the target service node is accomplished, and a credit score deducted from the target service node (namely, a credit score decrement corresponding to the target service node) is made public in the blockchain.

It should be noted here that, in an embodiment of the present specification, each service node in the blockchain network may be pre-allocated with an initial copyright credit score; or each service node may not be allocated with an initial copyright credit score, and then, the initial copyright credit score corresponding to each service node is 0.

Assuming that an initial copyright credit score corresponding to the target service node is 100 points, and the copyright credit score decrement (assumed to be 15 points) corresponding to the target service node is announced on the blockchain through steps S 100 to S104, it equivalents to adjusting the credit score corresponding to the target service node from 100 points to 100 - 15 = 85 points.

Through the method for performing credit evaluation on copyright users on the basis of a blockchain shown in FIG. 1, if a copyright usage event initiated by a target service node in a blockchain network is determined as illegal, a deduction is made to a copyright credit score corresponding to the target service node, and a deduction in copyright credit score (namely, a copyright credit score decrement) from the target service node must be subjected to consensus verification of a plurality of service nodes and pass the consensus verification before being announced to the blockchain. A copyright credit score deduction record corresponding to the target service node may be announced to the blockchain, based on which a copyright credit score corresponding to the target service node can be determined. A lower copyright credit score corresponding to the target service node indicates a lower level of credibility of the target service node. In this way, an open and credible credit evaluation system for copyright users can be established based on the characteristics of the blockchain that data records can be traced back and data records cannot be tampered with.

In addition, in step S102, a credit deduction transfer may be constructed on the basis of a node identifier of the target service node, the copyright credit score decrement, and a work identifier of the target work. In step S104, the credit deduction transfer is broadcast to the blockchain network, so that after consensus verification performed by a plurality of service nodes in the blockchain network on the credit deduction transfer is passed, a corresponding relationship among the node identifier, the copyright credit score decrement, and the work identifier is established and stored into the blockchain. In this way, the following information is also announced on the blockchain: the copyright credit decrement is caused by the copyright usage event.

Further, in an embodiment of the present specification, the copyright credit score decrement may be "attenuated" over time after being stored into the blockchain.

Specifically, after the credit deduction transfer is broadcast to the blockchain network, an attenuation score corresponding to the copyright credit score decrement is determined when a specified period elapses; the attenuation score is regarded as a copyright credit score supplementary increment corresponding to the copyright credit score decrement, and a decrement attenuation transfer is constructed on the basis of the node identifier and the copyright credit score supplementary increment; the decrement attenuation transfer is broadcast to the blockchain network, so that after consensus verification performed by a plurality of service nodes in the blockchain network on the decrement attenuation transfer is passed, a corresponding relationship between the node identifier and the copyright credit score supplementary increment is established and stored into the blockchain; and an attenuation score corresponding to the copyright credit score decrement is further determined when the specified period elapses again, until a first specified condition is satisfied.

The storing of the copyright credit score supplementary increment into the blockchain realizes "attenuation" of the copyright credit score decrement.

It should be noted that the first specified condition may be specified according to service requirements. For example, the first specified condition may be that the number of times a decrement attenuation transfer is broadcast reaches a specified number of times. For another example, the first specified condition may also be that a sum of copyright credit score supplementary increments corresponding to the copyright credit score decrement reaches the copyright credit score decrement.

In an embodiment of the present specification, copyright credit score deduction can be performed for a target service node initiating an illegal copyright usage event, and copyright credit score addition can also be performed for a target service node initiating a legal copyright usage event.

Specifically when the copyright usage event is determined as legal, a copyright credit score increment is determined; a credit addition transfer is constructed on the basis of the node identifier of the target service node and the copyright credit score increment; and the credit addition transfer is broadcast to the blockchain network, so that after consensus verification performed by a plurality of service nodes in the blockchain network on the credit addition transfer is passed, a corresponding relationship between the node identifier and the copyright credit score increment is established and stored into the blockchain.

In an embodiment of the present specification, the copyright credit score increment refers to the value of a credit score to be added, which is usually a positive value. The copyright credit score increment may be randomly determined, or may be determined according to actual service requirements. Those skilled in the art can easily think of a variety of manners to determine the copyright credit score increment.

Specifically, a second specified score is determined as the copyright credit score increment. That is, a fixed score may be regarded as the copyright credit score increment. It should be noted here that, in the context of the foregoing, the second specified score is usually less than the first specified score.

Further, before the copyright credit score increment is determined, the number of copyright usage events already initiated by the target service node may be determined; if the number of the copyright usage events already initiated by the target service node reaches a specified number, a proportion of legal copyright usage events in the copyright usage events already initiated by the target service node is determined as a legality proportion; and a reward coefficient is determined according to the legality proportion, where the reward coefficient is not less than 1, and the original proportion is positively correlated with the reward coefficient. It is worth emphasizing here that, in the context of the foregoing, generally speaking, for the legality proportion and the illegality proportion, if they have the same value, the reward coefficient corresponding to the legality proportion is less than the penalty coefficient corresponding to the illegality proportion.

Afterwards, the second specified score may be multiplied by the reward coefficient, and the second specified score multiplied by the reward coefficient is regarded as the copyright credit score increment.

For example, the number of the copyright usage events already initiated by the target service node is 100 (reaching a specified number 100), where the number of legal copyright usage events is 80, then the legality proportion is 80%, and a corresponding reward coefficient may be determined as 1.3. For another example, the number of works already published by the target service node on the blockchain is 100, where the number of legal copyright usage events is 60, then the legality proportion is 60%, and a corresponding penalty coefficient may be determined as 1.1. In this way, assuming that the second specified score is 15 points and the legality proportion is 60%, and then the copyright credit score increment is 1 5*1.1 = 16.5 points.

Further, in an embodiment of the present specification, the copyright credit score increment may also be "attenuated" over time after being stored into the blockchain.

Specifically, after the credit addition transfer is broadcast to the blockchain network, an attenuation score corresponding to the copyright credit score increment is determined when a specified period elapses; the attenuation score is regarded as a copyright credit score supplementary decrement corresponding to the copyright credit score increment, and an increment attenuation transfer is constructed on the basis of the node identifier and the copyright credit score supplementary decrement; the increment attenuation transfer is broadcast to the blockchain network, so that after consensus verification performed by a plurality of service nodes in the blockchain network on the increment attenuation transfer is passed, a corresponding relationship between the node identifier and the copyright credit score supplementary decrement is established and stored into the blockchain; and an attenuation score corresponding to the copyright credit score increment is further determined when the specified period elapses again, until a second specified condition is satisfied.

The storing of the copyright credit score supplementary decrement into the blockchain realizes "attenuation" of the copyright credit score increment.

It should be noted that the second specified condition may be specified according to service requirements. For example, the second specified condition may be that the number of times an increment attenuation transfer is broadcast reaches a specified number of times. For another example, the second specified condition may also be that a sum of copyright credit score supplementary decrements corresponding to the copyright credit score increment reaches the copyright credit score increment.

It should be noted that a credit score corresponding to a target service node may be obtained by combining copyright credit score increments and copyright credit score decrements corresponding to the target service node that are stored in the blockchain. For example, three copyright credit score increments corresponding to the target service node exist in the blockchain, which are 20, 15, and 10; two copyright credit score decrements corresponding to the target service node exist in the blockchain, which are 20 and 14. Thus, the credit score corresponding to the target service node is 20 + 15 + 10 - 20 - 14 = 11 points.

Further, in an embodiment of the present specification, a preset service restriction operation is performed on the target service node if the copyright credit score corresponding to the target service node is lower than a preset score. The service restriction operation is not specifically limited in the present specification. For example, the service restriction operation may be prohibiting the target service node from initiating a copyright usage event.

In an embodiment of the present specification, a comprehensive credit score of the user corresponding to the target service node may further be adjusted according to the copyright credit score corresponding to the target service node.

Specifically, the copyright credit score corresponding to the target service node may be divided by the number of works published by the target service node on the blockchain, so as to obtain a modified copyright credit score corresponding to the target service node. Then, the modified copyright credit score is provided to a comprehensive credit evaluator, so that the comprehensive credit evaluator converts the modified copyright credit score into a comprehensive credit reference score according to the modified copyright credit score and a preset conversion rule, and adjusts the comprehensive credit score of the user corresponding to the target service node according to the comprehensive credit reference score.

The copyright credit score in the present invention is a credit score for measuring a credit level of a person in the field of copyright services, and the comprehensive credit score may be a credit score for measuring the comprehensive credit of a person such as a Central Bank's credit score and a Sesame credit score.

For example, assuming that the copyright credit score corresponding to the target service node is 250 points, and the target service node publishes a total of 25 copyright works, the modified copyright credit score corresponding to the target service node is 250 / 25 = 10 points. Assuming that the conversion rule is 1 copyright credit score = 0.5 comprehensive credit score, the comprehensive credit evaluator may convert the modified copyright credit score of 10 points into the comprehensive credit reference score of 5 points, and accordingly adjust the comprehensive credit score of the user corresponding to the target service node.

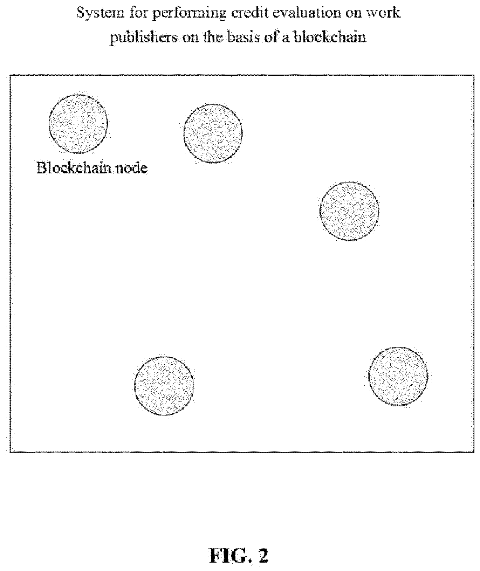

Based on the method for performing credit evaluation on copyright users on the basis of a blockchain shown in FIG. 1, an embodiment of the present specification further correspondingly provides a system for performing credit evaluation on copyright users on the basis of a blockchain. As shown in FIG. 2, the system includes a plurality of blockchain nodes.

For each blockchain node, the blockchain node has the function of implementing the method shown in FIG. 1, and/or participates in consensus verification of the credit deduction transfer, and after the consensus verification of the credit deduction transfer is passed, establishes a corresponding relationship between the node identifier and the copyright credit score decrement and stores it into the blockchain.

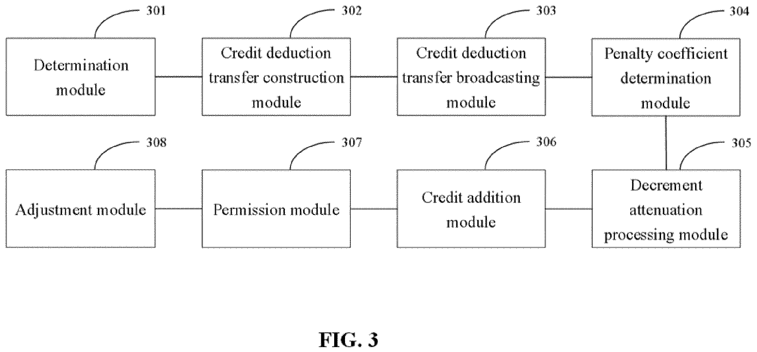

Based on the method for performing credit evaluation on copyright users on the basis of a blockchain shown in FIG. 1, an embodiment of the present specification further correspondingly provides a device for performing credit evaluation on copyright users on the basis of a blockchain. As shown in FIG. 3, a blockchain network includes a plurality of service nodes, and for each service node, the service node has the right to initiate a copyright usage event. T he device includes:
a determination module 301, configured to determine a copyright credit score decrement in response to a copyright usage event initiated by a target service node being determined as illegal, where the target service node is any service node in the blockchain network;
a credit deduction transfer construction module 302, configured to construct a credit deduction transfer on the basis of a node identifier of the target service node and the copyright credit score decrement; and
a credit deduction transfer broadcasting module 303, configured to broadcast the credit deduction transfer to the blockchain network, so that after consensus verification performed by a plurality of service nodes in the blockchain network on the credit deduction transfer is passed, a corresponding relationship between the node identifier and the copyright credit score decrement is established and stored into the blockchain,
wherein a copyright credit score corresponding to the target service node is positively correlated with the credit rating of a user corresponding to the target service node.

The determination module 301 determines a first specified score as the copyright credit score decrement.

The device further includes: a penalty coefficient determination module 304, configured to, before the copyright credit score decrement is determined, determine the number of copyright usage events already initiated by the target service node; if the number of the copyright usage events already initiated by the target service node reaches a specified number, determine, as an illegality proportion, a proportion of illegal copyright usage events in the copyright usage events already initiated by the target service node; and determine a penalty coefficient according to the illegality proportion, where the penalty coefficient is not less than 1, and the illegality proportion is positively correlated with the penalty coefficient.

The determination module 301 multiplies the first specified score by the penalty coefficient; and regards the first specified score multiplied by the penalty coefficient as the copyright credit score decrement.

The determination module 301 determines, as a target illegality type, an illegality type corresponding to the copyright usage event; and regards a penalty score corresponding to the target illegality type as the copyright credit score decrement according to a preset corresponding relationship between illegality types and penalty scores.

The determination module 301 determines the number of illegal copyright usage events already initiated by the target service node; and determines the copyright credit score decrement according to the number of the illegal copyright usage events already initiated by the target service node, where the number of the illegal copyright usage events already initiated by the target service node is positively correlated with the determined copyright credit score decrement.

The device further includes: a decrement attenuation processing module 305, configured to, after the credit deduction transfer is broadcast to the blockchain network, determine an attenuation score corresponding to the copyright credit score decrement when a specified period elapses; regard the attenuation score as a copyright credit score supplementary increment corresponding to the copyright credit score decrement, and construct a decrement attenuation transfer on the basis of the node identifier and the copyright credit score supplementary increment; broadcast the decrement attenuation transfer to the blockchain network, so that after consensus verification performed by a plurality of service nodes in the blockchain network on the decrement attenuation transfer is passed, a corresponding relationship between the node identifier and the copyright credit score supplementary increment is established and stored into the blockchain; and continue to determine an attenuation score corresponding to the copyright credit score decrement when the specified period elapses again, until a first specified condition is satisfied.

The device further includes: a credit addition module 306, configured to determine a copyright credit score increment when the copyright usage event is determined as legal; construct a credit addition transfer on the basis of the node identifier of the target service node and the copyright credit score increment; and broadcast the credit addition transfer to the blockchain network, so that after consensus verification performed by a plurality of service nodes in the blockchain network on the credit addition transfer is passed, a corresponding relationship between the node identifier and the copyright credit score increment is established and stored into the blockchain.

The credit addition module 306 determines a second specified score as the copyright credit score increment.

Before determining the copyright credit score increment, the credit addition module 306 determines the number of copyright usage events already initiated by the target service node; if the number of the copyright usage events already initiated by the target service node reaches a specified number, determines, as a legality proportion, a proportion of legal copyright usage events in the copyright usage events already initiated by the target service node; determines a reward coefficient according to the legality proportion, where the reward coefficient is not less than 1, and the original proportion is positively correlated with the reward coefficient; and multiplies a second specified score by the reward coefficient; and regards the second specified score multiplied by the reward coefficient as the copyright credit score increment.

After broadcasting the credit addition transfer to the blockchain network, the credit addition module 306 determines an attenuation score corresponding to the copyright credit score increment when a specified period elapses; regards the attenuation score as a copyright credit score supplementary decrement corresponding to the copyright credit score increment, and constructs an increment attenuation transfer on the basis of the node identifier and the copyright credit score supplementary decrement; broadcasts the increment attenuation transfer to the blockchain network, so that after consensus verification performed by a plurality of service nodes in the blockchain network on the increment attenuation transfer is passed, a corresponding relationship between the node identifier and the copyright credit score supplementary decrement is established and stored into the blockchain; and continues to determine an attenuation score corresponding to the copyright credit score increment when the specified period elapses again, until a second specified condition is satisfied.

The device further includes a restriction module 307, configured to perform a preset service restriction operation on the target service node if the copyright credit score corresponding to the target service node is lower than a preset score.

The device further includes an adjustment module 308, configured to adjust a comprehensive credit score of a user corresponding to the target service node according to the copyright credit score corresponding to the target service node.

The adjustment module 308 divides the copyright credit score corresponding to the target service node by the number of the copyright usage events already initiated by the target service node, so as to obtain a modified copyright credit score corresponding to the target service node; and provides the modified copyright credit score to a comprehensive credit evaluator, so that the comprehensive credit evaluator converts the modified copyright credit score into a comprehensive credit reference score according to the modified copyright credit score and a preset conversion rule, and adjusts the comprehensive credit score of the user corresponding to the target service node according to the comprehensive credit reference score.

An embodiment of the present specification further provides a computing apparatus, including at least a memory, a processor, and a computer program stored on the memory and capable of running on the processor, where the processor, when executing the program, implements the function of the method in FIG. 1.

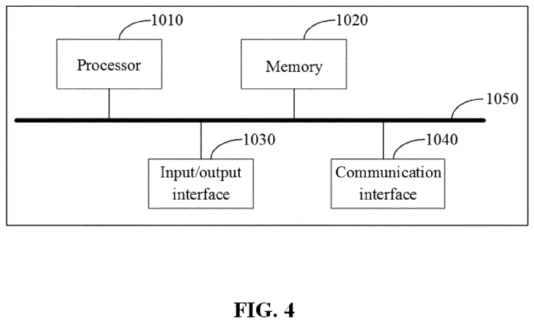

FIG. 4 shows a schematic hardware structural diagram of a more concrete computing device provided in an embodiment of the present specification. The device may include a processor 1010, a memory 1020, an input/output interface 1030, a communication interface 1040, and a bus 1050. The processor 1010, the memory 1020, the input/output interface 1030, and the communication interface 1040 implement mutual communication connection in the device through the bus 1050.

The processor 1010 may be implemented using a general-purpose CPU (Central Processing Unit), a microprocessor, an application specific integrated circuit (ASIC), or one or a plurality of integrated circuits, and configured to execute relevant programs to implement the technical solutions provided in the embodiments of the present specification.

The memory 1020 may be implemented in the form of a ROM (Read Only Memory), a RAM (Random Access Memory), a static storage device, a dynamic storage device, or the like. The memory 1020 may store an operating system and other applications. When the technical solutions provided in the embodiments of the present specification are implemented by software or firmware, relevant program code is saved in the memory 1020 and invoked and executed by the processor 1010.

The input/output interface 1030 is configured to be connected to an input/output module to implement information input and output. The input/output module may be configured as a component in the device (not shown in the figure), or may be externally connected to the device to provide a corresponding function. The input device may include a keyboard, a mouse, a touch screen, a microphone, various sensors, and so on, and the output device may include a display, a loudspeaker, a vibrator, an indicator, and so on.

The communication interface 1040 is configured to be connected to a communication module (not shown in the figure) to implement communication interaction between the local device and other devices. The communication module may implement communication in a wired manner (for example, through a USB or cable), or may implement communication in a wireless manner (for example, through a mobile network, WIFI, or Bluetooth).

The bus 1050 includes a path that transmits information between various components (for example, the processor 1010, the memory 1020, the input/output interface 1030, and the communication interface 1040) of the device.

It should be noted that although only the processor 1010, the memory 1020, the input/output interface 1030, the communication interface 1040, and the bus 1050 are shown in the aforementioned device, in the specific implementation process, the device may further include other components necessary for normal running. Furthermore, those skilled in the art can understand that the aforementioned device may also include only the components necessary to implement the solutions in the embodiments of the present specification, without the need to include all the components shown in the figure.

An embodiment of the present specification further provides a computer-readable storage medium storing a computer program, where when executed by a processor, the program implements the function of the method in FIG. 1 or FIG. 2 or FIG. 3.

The computer-readable medium includes permanent and non-permanent, movable and non-movable media that can achieve information storage by means of any methods or techniques. The information may be computer-readable instructions, data structures, modules of programs or other data. Examples of a storage medium of a computer include, but are not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible by a computing device. According to the definitions herein, the computer-readable medium does not include transitory computer-readable media (transitory media), such as a modulated data signal and a carrier wave.

Through the above description of the embodiments, those skilled in the art can clearly understand that the embodiments of the present specification can be implemented by means of software plus a necessary universal hardware platform. Based on such understanding, the essence of the technical solutions in the embodiments of the present specification or the part that contributes to the prior art may be embodied in the form of a software product. The computer software product may be stored in a storage medium such as a ROM/RAM, a magnetic disk, or an optical disc, and include several instructions to instruct a computer device (which may be a personal computer, a server, a network device, or the like) to perform the methods described in the embodiments of the present specification or in some parts of the embodiments.

The system, method, module, or unit illustrated in the aforementioned embodiments may be specifically implemented by a computer chip or an entity, or a product having a certain function. A typical implementation device is a computer, and the specific form of the computer may be a personal computer, a laptop computer, a cellular telephone, a camera phone, a smartphone, a personal digital assistant, a media player, a navigation device, an email transceiver device, a gaming console, a tablet computer, a wearable device, or a combination of any of these devices.

The embodiments in the present specification are described in a progressive manner, and for identical or similar parts between different embodiments, reference may be made to each other so that each of the embodiments focuses on differences from other embodiments. Especially, the device and device embodiments are described relatively briefly because they are substantially similar to the method embodiments, and for related parts, reference may be made to the method embodiments. The method embodiments described above are merely exemplary, where the modules described as separate components may or may not be physically separated, and the functions of the modules may be implemented in the same or a plurality of pieces of software and/or hardware in implementing the solutions in the embodiments of the present specification. The objective of the solution of this embodiment may also be implemented by selecting some or all of the modules according to actual requirements. Those of ordinary skill in the art can understand and implement the solution without making creative efforts.

The above descriptions are merely specific implementations of the embodiments of the present specification. It should be pointed out that those of ordinary skill in the art can also make several improvements and modifications without deviating from the principle of the embodiments of the present specification. These improvements and modifications should also be considered as falling within the protection scope of the embodiments of the present specification.

## Claims

1. A method for performing credit evaluation on copyright users on the basis of a blockchain, wherein a blockchain network comprises a plurality of service nodes, and each service node is permitted to initiate a copyright usage event, the method comprising:
determining a copyright credit score decrement in response to a copyright usage event initiated by a target service node being determined as illegal, wherein the target service node is any service node in the blockchain network;
constructing a credit deduction transfer on the basis of a node identifier of the target service node and the copyright credit score decrement; and
broadcasting the credit deduction transfer to the blockchain network, so that after consensus verification performed by a plurality of service nodes in the blockchain network on the credit deduction transfer is passed, a corresponding relationship between the node identifier and the copyright credit score decrement is established and stored into the blockchain,
wherein a copyright credit score corresponding to the target service node is positively correlated with a credit rating of a user corresponding to the target service node.

2. The method according to claim 1, wherein determining the copyright credit score decrement specifically comprises:
determining a first specified score as the copyright credit score decrement.

3. The method according to claim 2, wherein prior to determining the copyright credit score decrement, the method further comprises:
determining a number of copyright usage events already initiated by the target service node;
if the number of the copyright usage events already initiated by the target service node reaches a specified number, determining, as an illegality proportion, a proportion of illegal copyright usage events in the copyright usage events already initiated by the target service node;
determining a penalty coefficient according to the illegality proportion, wherein the penalty coefficient is not less than 1, and the illegality proportion is positively correlated with the penalty coefficient; and
wherein determining the first specified score as the copyright credit score decrement specifically comprises:
multiplying the first specified score by the penalty coefficient; and
regarding the first specified score multiplied by the penalty coefficient as the copyright credit score decrement.

4. The method according to claim 1, wherein determining the copyright credit score decrement specifically comprises:
determining, as a target illegality type, an illegality type corresponding to the copyright usage event; and
regarding a penalty score corresponding to the target illegality type as the copyright credit score decrement according to a preset corresponding relationship between illegality types and penalty scores.

5. The method according to claim 1, wherein determining the copyright credit score decrement specifically comprises:
determining a number of illegal copyright usage events already initiated by the target service node;
determining the copyright credit score decrement according to the number of the illegal copyright usage events already initiated by the target service node, wherein the number of the illegal copyright usage events already initiated by the target service node is positively correlated with the determined copyright credit score decrement.

6. The method according to claim 1, wherein after broadcasting the credit deduction transfer to the blockchain network, the method further comprises:
determining an attenuation score corresponding to the copyright credit score decrement when a specified period elapses;
regarding the attenuation score as a copyright credit score supplementary increment corresponding to the copyright credit score decrement, and constructing a decrement attenuation transfer on the basis of the node identifier and the copyright credit score supplementary increment;
broadcasting the decrement attenuation transfer to the blockchain network, so that after consensus verification performed by a plurality of service nodes in the blockchain network on the decrement attenuation transfer is passed, a corresponding relationship between the node identifier and the copyright credit score supplementary increment is established and stored into the blockchain; and
continuing to determine an attenuation score corresponding to the copyright credit score decrement when the specified period elapses again, until a first specified condition is satisfied.

7. The method according to claim 1, wherein the method further comprises:
determining a copyright credit score increment when the copyright usage event is determined as legal;
constructing a credit addition transfer on the basis of the node identifier of the target service node and the copyright credit score increment; and
broadcasting the credit addition transfer to the blockchain network, so that after consensus verification performed by a plurality of service nodes in the blockchain network on the credit addition transfer is passed, a corresponding relationship between the node identifier and the copyright credit score increment is established and stored into the blockchain.

8. The method according to claim 7, wherein determining the copyright credit score increment specifically comprises:
determining a second specified score as the copyright credit score increment.

9. The method according to claim 8, wherein prior to determining a copyright credit score increment, the method further comprises:
determining a number of copyright usage events already initiated by the target service node;
if the number of the copyright usage events already initiated by the target service node reaches a specified number, determining, as a legality proportion, a proportion of legal copyright usage events in the copyright usage events already initiated by the target service node; and
determining a reward coefficient according to the legality proportion, wherein the reward coefficient is not less than 1, and the original proportion is positively correlated with the reward coefficient; and
wherein determining the first specified score as the copyright credit score increment specifically comprises:
multiplying the second specified score by the reward coefficient; and
regarding the second specified score multiplied by the reward coefficient as the copyright credit score increment.

10. The method according to claim 7, wherein after broadcasting the credit addition transfer to the blockchain network, the method further comprises:
determining an attenuation score corresponding to the copyright credit score increment when a specified period elapses;
regarding the attenuation score as a copyright credit score supplementary decrement corresponding to the copyright credit score increment, and constructing an increment attenuation transfer on the basis of the node identifier and the copyright credit score supplementary decrement;
broadcasting the increment attenuation transfer to the blockchain network, so that after consensus verification performed by a plurality of service nodes in the blockchain network on the increment attenuation transfer is passed, a corresponding relationship between the node identifier and the copyright credit score supplementary decrement is established and stored into the blockchain; and
continuing to determine an attenuation score corresponding to the copyright credit score increment when the specified period elapses again, until a second specified condition is satisfied.

11. The method according to claim 1 or 7, wherein the method further comprises:
performing a preset service restriction operation on the target service node if the copyright credit score corresponding to the target service node is lower than a preset score.

12. The method according to claim 1 or 7, wherein the method further comprises:
adjusting a comprehensive credit score of the user corresponding to the target service node according to the copyright credit score corresponding to the target service node.

13. The method according to claim 12, wherein adjusting the comprehensive credit score of the user corresponding to the target service node according to the copyright credit score corresponding to the target service node specifically comprises:
dividing the copyright credit score corresponding to the target service node by a number of the copyright usage events already initiated by the target service node, so as to obtain a modified copyright credit score corresponding to the target service node; and
providing the modified copyright credit score to a comprehensive credit evaluator, so that the comprehensive credit evaluator converts the modified copyright credit score into a comprehensive credit reference score according to the modified copyright credit score and a preset conversion rule, and adjusts the comprehensive credit score of the user corresponding to the target service node according to the comprehensive credit reference score.

14. A device for performing credit evaluation on copyright users on the basis of a blockchain, wherein a blockchain network comprises a plurality of service nodes, and each service node is permitted to initiate a copyright usage event, the device comprising:
a determination module, configured to determine a copyright credit score decrement in response to a copyright usage event initiated by a target service node being determined as illegal, wherein the target service node is any service node in the blockchain network;
a credit deduction transfer construction module, configured to construct a credit deduction transfer on the basis of a node identifier of the target service node and the copyright credit score decrement; and
a credit deduction transfer broadcasting module, configured to broadcast the credit deduction transfer to the blockchain network, so that after consensus verification performed by a plurality of service nodes in the blockchain network on the credit deduction transfer is passed, a corresponding relationship between the node identifier and the copyright credit score decrement is established and stored into the blockchain,
wherein a copyright credit score corresponding to the target service node is positively correlated with a credit rating of a user corresponding to the target service node.

15. The device according to claim 14, wherein the determination module determines a first specified score as the copyright credit score decrement.

16. The device according to claim 15, wherein the device further comprises:
a penalty coefficient determination module, configured to, before the copyright credit score decrement is determined, determine a number of copyright usage events already initiated by the target service node; if the number of the copyright usage events already initiated by the target service node reaches a specified number, determine, as an illegality proportion, a proportion of illegal copyright usage events in the copyright usage events already initiated by the target service node; and determine a penalty coefficient according to the illegality proportion, wherein the penalty coefficient is not less than 1, and the illegality proportion is positively correlated with the penalty coefficient,
wherein the determination module is configured to: multiply the first specified score by the penalty coefficient; and regard the first specified score multiplied by the penalty coefficient as the copyright credit score decrement.

17. The device according to claim 14, wherein the determination module is configured to: determine, as a target illegality type, an illegality type corresponding to the copyright usage event; and regard a penalty score corresponding to the target illegality type as the copyright credit score decrement according to a preset corresponding relationship between illegality types and penalty scores.

18. The device according to claim 14, wherein the determination module is configured to: determine a number of illegal copyright usage events already initiated by the target service node; and determine the copyright credit score decrement according to the number of the illegal copyright usage events already initiated by the target service node, wherein the number of the illegal copyright usage events already initiated by the target service node is positively correlated with the determined copyright credit score decrement.

19. The device according to claim 14, wherein the device further comprises:
a decrement attenuation processing module, configured to: after the credit deduction transfer is broadcast to the blockchain network, determine an attenuation score corresponding to the copyright credit score decrement when a specified period elapses; regard the attenuation score as a copyright credit score supplementary increment corresponding to the copyright credit score decrement, and construct a decrement attenuation transfer on the basis of the node identifier and the copyright credit score supplementary increment; broadcast the decrement attenuation transfer to the blockchain network, so that after consensus verification performed by a plurality of service nodes in the blockchain network on the decrement attenuation transfer is passed, a corresponding relationship between the node identifier and the copyright credit score supplementary increment is established and stored into the blockchain; and continue to determine an attenuation score corresponding to the copyright credit score decrement when the specified period elapses again, until a first specified condition is satisfied.

20. The device according to claim 14, wherein the device further comprises:
a credit addition module, configured to: determine a copyright credit score increment if the copyright usage event is determined as legal; construct a credit addition transfer on the basis of the node identifier of the target service node and the copyright credit score increment; and broadcast the credit addition transfer to the blockchain network, so that after consensus verification performed by a plurality of service nodes in the blockchain network on the credit addition transfer is passed, a corresponding relationship between the node identifier and the copyright credit score increment is established and stored into the blockchain.

21. The device according to claim 20, wherein the credit addition module is configured to determine a second specified score as the copyright credit score increment.

22. The device according to claim 21, wherein prior to determining the copyright credit score increment, the credit addition module is configured to: determine the number of copyright usage events already initiated by the target service node; if the number of the copyright usage events already initiated by the target service node reaches a specified number, determine, as a legality proportion, a proportion of legal copyright usage events in the copyright usage events already initiated by the target service node; determine a reward coefficient according to the legality proportion, wherein the reward coefficient is not less than 1, and the original proportion is positively correlated with the reward coefficient; and multiply the second specified score by the reward coefficient; and regards the second specified score multiplied by the reward coefficient as the copyright credit score increment.

23. The device according to claim 20, wherein after broadcasting the credit addition transfer to the blockchain network, the credit addition module is configured to: determine an attenuation score corresponding to the copyright credit score increment when a specified period elapses; regard the attenuation score as a copyright credit score supplementary decrement corresponding to the copyright credit score increment, and construct an increment attenuation transfer on the basis of the node identifier and the copyright credit score supplementary decrement; broadcast the increment attenuation transfer to the blockchain network, so that after consensus verification performed by a plurality of service nodes in the blockchain network on the increment attenuation transfer is passed, a corresponding relationship between the node identifier and the copyright credit score supplementary decrement is established and stored into the blockchain; and continues to determine an attenuation score corresponding to the copyright credit score increment when the specified period elapses again, until a second specified condition is satisfied.

24. The device according to claim 14 or 20, wherein the device further comprises:
a restriction module, configured to perform a preset service restriction operation on the target service node if the copyright credit score corresponding to the target service node is lower than a preset score.

25. The device according to claim 14 or 20, wherein the device further comprises:
an adjustment module, configured to adjust a comprehensive credit score of the user corresponding to the target service node according to the copyright credit score corresponding to the target service node.

26. The device according to claim 25, wherein the adjustment module is configured to: divide the copyright credit score corresponding to the target service node by a number of the copyright usage events already initiated by the target service node, so as to obtain a modified copyright credit score corresponding to the target service node; and provide the modified copyright credit score to a comprehensive credit evaluator, so that the comprehensive credit evaluator converts the modified copyright credit score into a comprehensive credit reference score according to the modified copyright credit score and a preset conversion rule, and adjusts the comprehensive credit score of the user corresponding to the target service node according to the comprehensive credit reference score.

27. A computing apparatus, comprising a memory, a processor, and a computer program stored on the memory and capable of running on the processor, wherein the processor, when executing the program, implements the method according to any one of claims 1 to 12.
